# DEMANDE DE BREVET EUROPEEN

(11) **EP 4 563 937 A1**
(43) Date de publication de la demande: **04.06.2025**
(21) Numéro de dépôt: 24202102.0
(22) Date de dépôt: 24.09.2024
(51) Int. Cl.: G01B 11/16, G01B 11/245, G01B 11/25, G01B 11/06

(54) **DISPOSTIF DE MESURE TOPOGRAPHIQUE ET PROCÉDÉ DE MESURE TOPOGRAPHIQUE**

(30) Priorité: 28.11.2023 FR 2313186
(71) Demandeur: Insidix, 38360 Noyarey (FR)
(72) Inventeur: BRAISAZ, Régis, 38140 Reaumont (FR); VERNHES, Pierre, 38410 Saint-Martin-D'Uriage (FR)
(74) Mandataire: Talbot, Alexandre

(57) **Abrégé**

Un dispositif de mesure topographique comporte un porte-échantillon (1) recevant un échantillon (2). Un premier projecteur (3) applique une première lumière texturée (4) sur une première partie (2a) de l'échantillon (2). Un deuxième projecteur (5) applique une deuxième lumière texturée (6) sur une deuxième partie (2b) de l'échantillon (2) différente de la première partie (2a). Une première caméra (7) observe la première lumière texturée appliquée sur la première partie (2a) pour acquérir des premières images (8). Une deuxième caméra (9) observe la deuxième lumière texturée (6) appliquée sur la deuxième partie (2b) pour acquérir des deuxièmes images (10). La deuxième lumière texturée (6) possède des motifs avec un deuxième pas de répétition plus faible qu'un premier pas de répétition des motifs de la première lumière texturée (4).

## Description

### Domaine technique

L'invention concerne un dispositif de mesure topographique et un procédé de mesure topographique.

### Technique antérieure

Dans de nombreux domaines techniques liés aux circuits imprimés, on associe différents matériaux avec des motifs particuliers pour former des fonctions électriques ou électroniques. Ces motifs font que le volume d'un circuit imprimé n'est pas homogène de sorte qu'il se déforme de manière anisotrope en fonction de la température et dans le temps. Il ressort également que les circuits imprimés possèdent généralement des éléments qui font saillie d'une surface principale. Ces éléments en saillie doivent avoir une forme et des dimensions les mieux maîtrisées possibles. A titre d'exemple, les éléments en saillie sont des plots électriquement conducteurs qui vont servir de contact électrique pour une puce électronique ou tout autre dispositif électronique. La bonne maîtrise dimensionnelle des éléments en saillie permet d'assurer un contact électrique performant.

Il est important de pouvoir mesurer le plus précisément possible et le plus rapidement possible la forme et les dimensions des multiples éléments en saillie. Il est également important de connaître la déformation générale ou particulière d'une puce ou d'un circuit imprimé afin d'anticiper les causes de défaillance.

Il est connu de réaliser une mesure des dimensions des éléments en saillie et de déformation d'une puce au moyen d'un procédé optique. On applique une lumière texturée sur la surface d'un échantillon. La lumière texturée définit une pluralité de motifs répétitifs qui sont appliqués sur la surface de l'échantillon.

Plusieurs images sont acquises de la surface de l'échantillon qui est éclairée par la lumière texturée. En analysant les différentes images, il est possible de calculer les dimensions et la forme des éléments en saillie et/ou de calculer la déformation tridimensionnelle de la puce.

La qualité de la mesure est fortement dépendante de la qualité des images qui ont été acquises ainsi que des caractéristiques de la lumière texturée. La lumière texturée définit plusieurs zones ayant des différences de couleurs, typiquement des zones noires et des zones blanches avec préférentiellement une transition par des niveaux de gris. La distance entre deux zones noires ou deux zones blanches, impose la résolution de la mesure de déformation. La qualité de la mesure dépend également de la résolution de la lumière texturée, c'est-à-dire de la distance entre deux zones blanches ou deux zones noires. La résolution est limitée par la technique de formation de la lumière texturée ainsi que par des limitations physiques. La surface d'étude étant réduite, il n'est pas possible d'avoir une densité de franges qui est infinie.

De manière logique, la qualité de la mesure est fonction de la performance optique de la caméra, c'est-à-dire la résolution de l'image acquise par la caméra, ce qui correspond au nombre de pixels par unité de longueur. Pour un échantillon donné et pour une caméra donnée, il y a un compromis à trouver entre la définition de mesure apte à être définie par la lumière texturée et la résolution de mesure de la caméra. Il est inutile de fournir une lumière texturée avec un pas de répétition très faible si ce dernier est bien inférieur à la résolution de la caméra. A l'inverse, une caméra possédant une résolution importante sera limitée par la résolution d'une lumière texturée avec un pas grossier.

Afin de conserver un encombrement et un coût raisonnables, il n'est pas intéressant d'avoir une caméra avec une surface de collecte importante et un pas de définition faible. Il est aussi contreproductif de rechercher une lumière texturée qui est la plus fine possible afin de mesurer des déformations grossières de l'échantillon. Selon le type de déformation à mesurer, il faut adapter les caractéristiques de la lumière texturée et la résolution de la caméra.

### Objet de l'invention

Un objet de l'invention consiste à prévoir un dispositif de mesure topographique qui présente un meilleur compromis entre sa capacité à mesurer une déformation grossière et sa capacité à mesurer une déformation fine.

On tend à atteindre ce résultat au moyen d'un dispositif de mesure topographique comportant :
- un porte-échantillon destiné à recevoir un échantillon ;
- un premier projecteur destiné à appliquer une première lumière texturée sur au moins une première partie de l'échantillon ;
- un deuxième projecteur destiné à appliquer une deuxième lumière texturée sur au moins une deuxième partie de l'échantillon, la deuxième partie étant différente de la première partie ;
- une première caméra destinée à observer la première lumière texturée appliquée sur la première partie de l'échantillon pour acquérir une première série d'images ;
- une deuxième caméra destinée à observer la deuxième lumière texturée appliquée sur la deuxième partie de l'échantillon pour acquérir une deuxième série d'images ;
- un circuit de commande connecté au premier projecteur, au deuxième projecteur, à la première caméra et à la deuxième caméra, le circuit de commande étant configuré pour que la deuxième lumière texturée possède des motifs avec un deuxième pas de répétition plus faible qu'un premier pas de répétition des motifs de la première lumière texturée.

De manière avantageuse, la deuxième partie est adjacente à la première partie.

Dans une configuration particulière, la deuxième partie recouvre au moins partiellement la première partie.

Dans un développement avantageux, la première partie de l'échantillon forme un anneau autour de la deuxième partie de l'échantillon.

Préférentiellement, le premier projecteur définit une zone vide dépourvue de motifs. Le deuxième projecteur éclaire la zone vide sans éclairer les motifs de la première lumière texturée.

Selon un mode de réalisation, le circuit de commande est configuré pour acquérir simultanément les images de la première série d'images et de la deuxième série d'images.

Dans un développement avantageux, le circuit de commande est connecté à au moins un obturateur configuré pour bloquer alternativement une transmission de la première lumière texturée et de la deuxième lumière texturée en direction du porte-échantillon dans la deuxième partie pour éviter une superposition de la première lumière texturée et de la deuxième lumière texturée ou le circuit de commande est configuré pour émettre alternativement la première lumière texturée et la deuxième lumière texturée.

Préférentiellement, le circuit de commande est configuré pour acquérir au moins une image de la deuxième série d'images entre deux images de la première série d'images, dans un période temps.

L'invention a également pour objet un procédé de mesure topographique d'un échantillon qui réalise plus facilement des mesures de déformation grossière et de déformation fine.

On tend à atteindre ce résultat au moyen d'un procédé de mesure topographique d'un échantillon comportant les étapes suivantes :
- disposer un échantillon sur un porte-échantillon ;
- appliquer une rampe en température sur l'échantillon ;
- appliquer une première lumière texturée sur une première partie de l'échantillon et une deuxième lumière texturée sur une deuxième partie de l'échantillon différente de la première partie de l'échantillon, la deuxième lumière texturée possédant des motifs avec un deuxième pas de répétition plus faible qu'un premier pas de répétition des motifs de la première lumière texturée ;
- acquérir une première série d'images de la première lumière texturée appliquée sur la première partie de l'échantillon durant la rampe en température ;
- acquérir une deuxième série d'images de la deuxième lumière texturée appliquée sur la deuxième partie de l'échantillon durant la rampe en température ;
- traiter la première série d'images et la deuxième série d'images pour déterminer une première déformation de la première partie et une deuxième déformation de la deuxième partie durant la rampe en température.

Dans un développement préférentiel, la deuxième partie est incluse dans la première partie. On soustrait la première déformation à la deuxième déformation.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre schématiquement un mode de réalisation d'un dispositif de mesure topographique selon l'invention ;
- la figure 2 illustre schématiquement une vue de dessus d'un échantillon soumis à deux lumières texturées différentes ;
- la figure 3 illustre schématiquement une vue de dessus d'un échantillon soumis à deux lumières texturées différentes ;
- la figure 4 illustre schématiquement une vue de dessus d'un échantillon soumis à la première lumière texturée qui est apte à recouvrir des deuxièmes parties de l'échantillon illustrées en pointillé ;
- la figure 5 illustre schématiquement une vue de dessus d'un échantillon soumis à la première lumière texturée qui définit des zones vides délimitant des deuxièmes parties de l'échantillon illustrées en pointillé ;
- la figure 6 illustre schématiquement une vue de dessus d'un échantillon soumis à la deuxième lumière texturée délimitant des deuxièmes parties de l'échantillon, la première partie étant illustrée en pointillé.

### Description des modes de réalisation

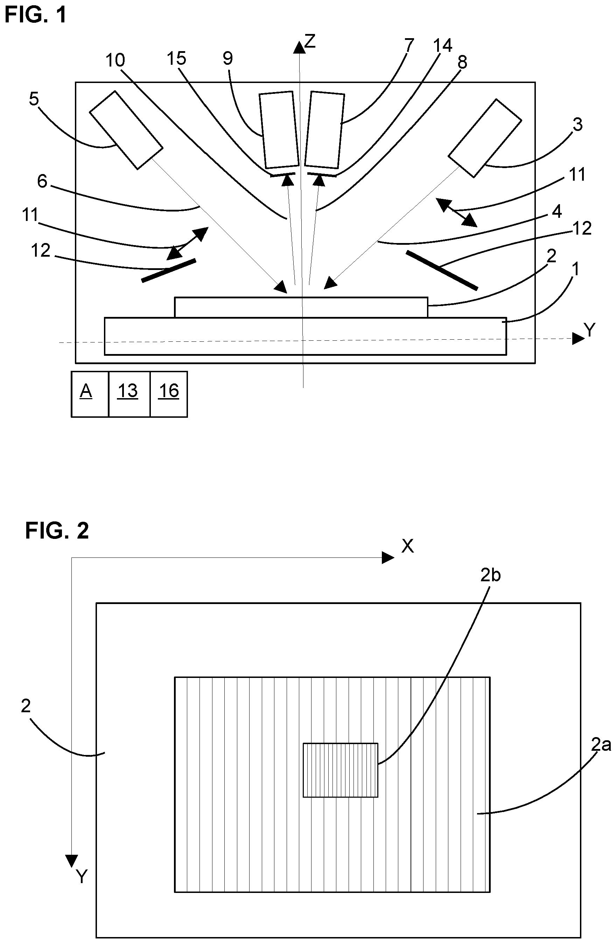

La figure 1 illustre un dispositif de mesure topographique qui possède un porte-échantillon 1 destiné à supporter un échantillon 2. Le dispositif de mesure topographique comporte également un premier projecteur 3 destiné à appliquer une première lumière texturée 4 sur au moins une première partie 2a de l'échantillon 2 ainsi qu'un deuxième projecteur 5 destiné à appliquer une deuxième lumière texturée 6 sur au moins une deuxième partie 2b de l'échantillon 2. La deuxième partie 2b est différente de la première partie 2a.

Le porte-échantillon 1 possède une première face destinée à recevoir l'échantillon 2. La direction Z est normale à la première face.

Chacun de la première lumière texturée 4 et de la deuxième lumière texturée 6 définit plusieurs motifs répétitifs par exemple plusieurs franges. L'éclairage de la surface de l'échantillon 2 est réalisé par le premier projecteur 3 et le deuxième projecteur 5. La lumière texturée peut être une image en nuances de gris ou en nuance d'autres couleurs et éventuellement en noir et blanc. La lumière texturée définit des motifs qui se répètent avec une fréquence prédéfinie et une phase prédéfinie. Les projecteurs sont des moyens de projection qui sont configurés pour projeter une lumière texturée de préférence dans le domaine visible.

La lumière texturée forme avantageusement un réseau de franges, par exemple de type moiré ou « shadow moiré ». Dans un mode de réalisation, le projecteur émet directement un réseau de franges. Dans une variante de réalisation, la lumière texturée est formée au moyen d'un masque qui est traversé par la lumière provenant du projecteur. Le masque comporte des ouvertures et des zones opaques, par exemple sous la forme d'un réseau de Ronchi. Il est également possible de combiner ces deux techniques.

Des motifs prédéfinis sont appliqués sur la surface de l'échantillon et la topographie de l'échantillon va modifier la forme des motifs appliqués. En analysant les changements de forme des motifs, il est possible de calculer la déformation tridimensionnelle de l'échantillon.

Le dispositif de mesure topographique comporte une première caméra 7 destinée à observer la première lumière texturée 4 appliquée sur la première partie 2a de l'échantillon 2 pour acquérir au moins une première série d'images 8 ainsi qu'une deuxième caméra 9 destinée à observer la deuxième lumière texturée 6 appliquée sur la deuxième partie 2b de l'échantillon 2 pour acquérir au moins une deuxième série d'images 10. La deuxième caméra 9 est différente de la première caméra 7. En alternative, la première caméra 7 et la deuxième caméra 9 partagent le même capteur de saisie, mais l'image provient de deux chemins différents au moyen de lentilles et/ou de prismes de manière à observer deux portions différentes de l'échantillon 2 posé sur le porte-échantillon 1.

La première caméra 7 et la deuxième caméra 9 sont des moyens de capture d'image configurés pour acquérir des séries d'images de la surface de l'échantillon 2. La première caméra 7 et la deuxième caméra 9 sont agencées pour capturer la lumière texturée appliquée sur la surface de l'échantillon 2. Préférentiellement, l'axe optique de la première caméra 7 et de la deuxième caméra 9 est parallèle à la direction Z normale à la surface du porte-échantillon 1 ou présente un décalage faible par rapport à la direction Z.

Chaque caméra acquiert une série d'images. Les images de chaque série sont comparées entre elles ou à une référence, pour observer les déformations des lumières texturées et en déduire les déformations de l'échantillon 2.

Les images sont envoyées à un circuit de calcul A configuré pour calculer les déformations entre les images et calculer la déformation tridimensionnelle de l'échantillon 2.

Le dispositif de mesure topographique comporte un circuit de commande 16 connecté au premier projecteur 3, au deuxième projecteur 5, à la première caméra 7 et à la deuxième caméra 9. Le circuit de commande 16 est configuré pour que la deuxième lumière texturée 6 possède des motifs avec un deuxième pas de répétition plus faible qu'un premier pas de répétition des motifs de la première lumière texturée 4. La deuxième lumière texturée 6 possédant des motifs avec un deuxième pas de répétition plus faible qu'un premier pas de répétition des motifs de la première lumière texturée 4, la deuxième lumière texturée 6 permet de mesurer des déformations plus fines que la première lumière texturée 4.

Durant la déformation de l'échantillon 2, la première caméra 7 va acquérir une série d'images de la première partie 2a de l'échantillon 2 sur laquelle est appliquée la première lumière texturée 4 avec le premier pas de répétition. Pour mesurer les informations pertinentes, la résolution de la première caméra 7 est adaptée à la surface de la première partie 2a et à la quantité d'information fournie par la première lumière texturée 4. Plus la première partie 2a aura une surface importante et plus la quantité d'information à traiter est importante. Plus le pas de répétition de la première lumière texturée 4 est faible, c'est-à-dire la distance entre deux franges identiques et plus la quantité d'information à traiter est importante. Les performances de la première caméra 7 définissent le couple : surface de la première partie/pas de répétition de la première lumière texturée 4. Il est avantageux que la première caméra 7 possède un grossissement ajustable de manière à ajuster les performances de la mesure aux besoins. De manière privilégiée, le premier projecteur 3 est muni d'un moyen de grossissement, par exemple une pluralité de lentilles mobiles, qui est configuré pour augmenter ou réduire le grossissement du pas de répétition de la première lumière texturée 4. Préférentiellement, le pas de répétition est adapté à l'étendu de la surface de la première partie 2a et/ou à la résolution de mesure souhaitée. En alternative, le premier projecteur 3 est apte à délivrer différentes premières lumières texturées 4 avec des pas de répétition différents.

Durant la déformation de l'échantillon 2, la deuxième caméra 9 va acquérir une série d'images de la deuxième partie 2b de l'échantillon 2 sur laquelle est appliquée la deuxième lumière texturée 6 avec le deuxième pas de répétition. La résolution de la deuxième caméra 9 est adaptée à la définition fournie par la deuxième lumière texturée 6 et à la taille de la deuxième partie 2b pour mesurer les informations pertinentes. Il est avantageux que la deuxième caméra 9 possède un grossissement ajustable de manière à ajuster les performances de la mesure aux besoins. De manière privilégiée, le deuxième projecteur 5 est muni d'un moyen de grossissement, par exemple une pluralité de lentilles mobiles, qui est configuré pour augmenter ou réduire le grossissement du pas de répétition de la deuxième lumière texturée 6. Préférentiellement, le pas de répétition est adapté à l'étendu de la surface de la deuxième partie 2b et/ou à la résolution de mesure souhaitée. En alternative, le deuxième projecteur 5 est apte à délivrer différentes deuxièmes lumières texturées 6 avec des pas de répétition différents.

Le deuxième pas de répétition étant plus faible que le premier pas de répétition, il est avantageux que la résolution de la deuxième caméra 9 soit supérieure à la résolution de la première caméra 7. Préférentiellement, le grossissement de la deuxième caméra 9 est supérieur au grossissement de la première caméra 7, durant la mesure de déformation, si les capteurs des deux caméras possèdent la même définition. Par exemple, La première caméra 7 et la deuxième caméra 9 sont identiques et l'adaptation de la résolution des images prises par les deux caméras est définie par le grossissement de la lentille disposée en amont du capteur le long du chemin optique.

Le dispositif de mesure topographique comporte des moyens de chauffage 12 et/ou de refroidissement 13 qui sont connectés au circuit de commande 16. Les moyens de chauffage 12 et/ou de refroidissement 13 sont disposés de manière à chauffer ou refroidir l'échantillon 2 pour que l'échantillon 2 suive un profil de température prédéfini. De manière préférentielle, les moyens de chauffage 12 comportent un chauffage par rayonnement infrarouge. Avantageusement, les moyens de refroidissement 13 comportent l'application d'un fluide qui circule dans le porte-échantillon 1 ou en contact direct du porte-échantillon 1. Selon les besoins, le fluide peut être un gaz ou un liquide. La nature du fluide dépend de la température minimale de porte-échantillon 1 que l'on souhaite atteindre.

Le circuit de commande 16 applique une rampe en température à l'échantillon 2. Durant la rampe en température, la valeur de température de l'échantillon 2 évolue et l'échantillon 2 se déforme. Durant la rampe en température, la première lumière texturée 4 est appliquée sur la première partie 2a de l'échantillon 2 et la deuxième lumière texturée 6 est appliquée sur la deuxième partie 2b de l'échantillon 2. Durant la rampe en température, la première série d'images 8 et la deuxième série d'images 10 sont acquises. Les images de la première série d'images 8 sont utilisées, par exemple, pour mesurer la déformation de la première partie 2a durant la rampe en température. Les images de la deuxième série d'images 10 sont utilisées, par exemple, pour mesurer la déformation de la deuxième partie 2b durant la rampe en température.

Durant la même rampe en température, la deuxième série d'images 10 permet de réaliser une mesure plus fine de la déformation dans la deuxième partie 2b que la mesure de déformation dans la première partie 2a qui est réalisée par la première série d'images 8. Les deux séries d'images sont acquises durant la même rampe en température ce qui permet de mieux caractériser le comportement de l'échantillon 2 en comparaison de deux mesures réalisées dans deux rampes en températures successives car cela évite un effet de vieillissement de l'échantillon 2.

Il est particulièrement avantageux d'utiliser les données de déformation acquises pour la première partie 2a afin de calculer des données de déformation plus précises pour la deuxième partie 2b. Afin que les données de déformation relatives à la première partie 2a soient les plus pertinentes pour étudier la déformation de la deuxième partie 2b, il est préférable que la deuxième partie 2b soit la plus proche possible de la première partie 2a. Avantageusement, la deuxième partie 2b est adjacente à la première partie 2a, c'est-à-dire que la première partie 2a possède une interface avec la deuxième partie 2b.

Avantageusement, au moins une portion de la deuxième partie 2b est incluse dans la première partie 2a. La première partie 2a peut être considérée comme un polygone non convexe et non croisé, par exemple un rectangle dont on a supprimé l'intersection avec un rectangle plus petit. La deuxième partie 2b empiète à l'intérieur de la première partie 2a. Selon les configurations, la portion prise par la deuxième partie 2b est mesurée ou non au moyen de la première lumière texturée 4 et la première caméra 7. Préférentiellement, au moins 50% de la surface de la deuxième partie 2b est incluse dans la surface de la première partie 2a. Plus avantageusement, la deuxième partie 2b est incluse dans la première partie 2a, c'est-à-dire que la première partie 2a forme un anneau autour de la deuxième partie 2b.

L'application de la première lumière texturée 4 et l'application de la deuxième lumière texturée 6 sur la première partie 2a et sur la deuxième partie 2b peuvent être réalisées de différentes manières. Dans un cas de figure, la première lumière texturée 4 et la deuxième lumière texturée 6 sont appliquées simultanément durant la rampe en température. Ce mode de réalisation est avantageux lorsque la première caméra 7 et la deuxième caméra 9 réalisent respectivement l'acquisition de la première série d'images 8 et de la deuxième série d'images 10 simultanément. De manière préférentielle, par simultanément on entend des acquisitions au même instant.

Lorsque la première partie 2a et la deuxième partie 2b sont légèrement décalées ou possèdent un unique côté comme interface, il est possible d'appliquer les deux lumières texturées simplement. Lorsque la première partie 2a et la deuxième partie 2b se recouvrent en partie ou totalement, il est important que la première lumière texturée 4 ne se superpose pas avec la deuxième lumière texturée 6. La première lumière texturée 4 va définir une zone vide, c'est-à-dire une zone sans motif qui est de préférence une zone non-éclairée. Cette zone vide correspond en totalité ou en partie à la deuxième partie 2b.

La zone vide peut provenir d'une partie du dispositif d'éclairage du premier projecteur 3 qui n'est pas activée ou d'un obturateur 11 disposé entre le premier projecteur 3 et l'échantillon 2 selon le chemin optique. La zone vide correspond préférentiellement le plus fidèlement possible à la deuxième partie 2b. La deuxième lumière texturée 6 est appliquée dans la zone vide délimitée au moins en partie par la première lumière texturée 4. Un obturateur 11 peut également être présent le long du chemin optique du deuxième projecteur 5 pour former une zone vide, c'est-à-dire sans éclairage par le deuxième projecteur 5.

L'activation et l'extinction de l'obturateur 11 permettent de modifier l'étendue de la zone éclairée. Préférentiellement, l'obturateur 11 associé au premier projecteur 3 fonctionne indépendamment de l'obturateur 11 du deuxième projecteur 5.

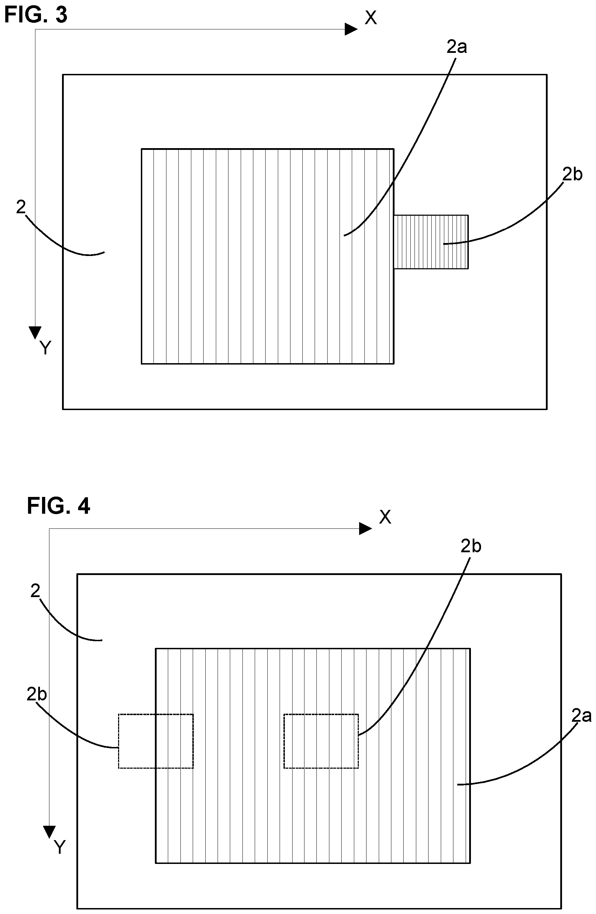

Il est avantageux d'utiliser une zone vide qui est une zone non-éclairée afin de pouvoir profiter d'une plus grande dynamique dans la définition des motifs et notamment lorsque les motifs sont représentés en noir et blanc ou avec des niveaux de gris. En alternative, la première lumière texturée 4 et la deuxième lumière texturée 6 utilisent des longueurs d'onde différentes par exemple pour définir des couleurs différentes et sont projetées simultanément sur la totalité de leur zone respective. La première caméra 7 ou le circuit de commande 16 sélectionne la première lumière texturée 4 par analyse colorimétrique, ou préférentiellement par un premier filtre optique 14. La deuxième caméra 9 sélectionne la deuxième lumière texturée 6 par analyse colorimétrique, ou préférentiellement par un deuxième filtre optique 15. La figure 2 illustre un mode de réalisation où la première partie 2a entoure complètement la deuxième partie 2b et les deux lumières texturées sont appliquées simultanément, la deuxième partie 2b étant disposée à l'intérieur d'un anneau défini par la première partie 2a. La figure 3 illustre un mode de réalisation où la première partie 2a et la deuxième partie 2b sont adjacentes et décalées l'une de l'autre. L'interface se présente sous la forme d'une ligne droite.

Dans un mode de réalisation préférentiel, le circuit de commande 16 est configuré pour acquérir simultanément les images de la première série d'images 8 et de la deuxième série d'images 10 dans une période de temps. La première lumière texturée 4 est appliquée avec une première longueur d'onde et la deuxième lumière texturée 6 est appliquée avec une deuxième longueur d'onde différente de la première longueur d'onde. Le circuit de commande 16 sépare la première lumière texturée 4 et la deuxième lumière texturée 6 par analyse colorimétrique ou la première caméra 7 et la deuxième caméra 9 sont munies de filtres optiques.

Dans une alternative de réalisation illustrée aux figures 4, 5 et 6, la première lumière texturée 4 est appliquée alternativement avec la deuxième lumière texturée 6 durant la rampe en température. Ce mode de réalisation est avantageux lorsque la deuxième partie 2b est incluse au moins en partie dans la première partie 2a.

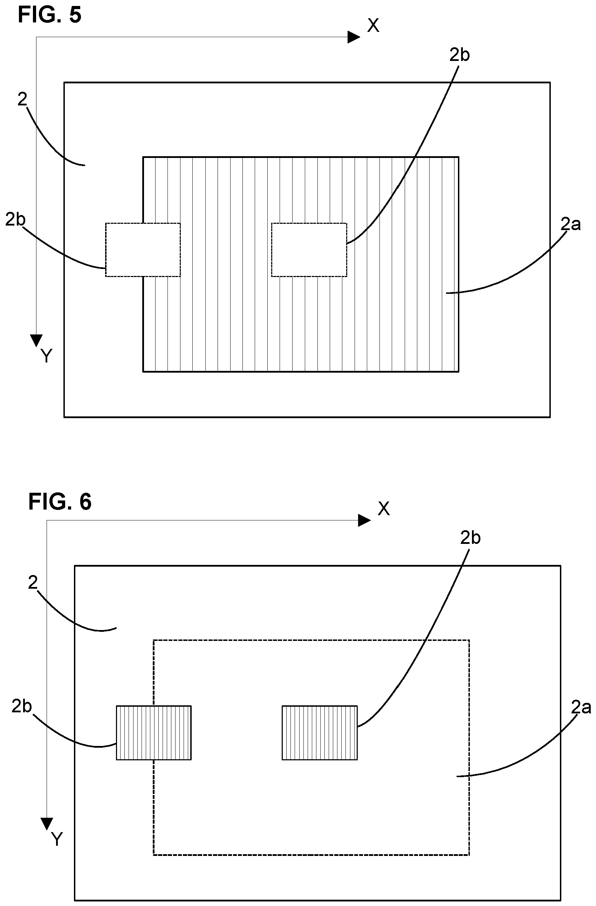

Le premier projecteur 3 et le deuxième projecteur 5 peuvent appliquer respectivement la première lumière texturée 4 et la deuxième lumière texturée 6 alternativement sur la première partie 2 et la deuxième partie 2b. Les figures 4 et 5 illustrent l'application de la première lumière texturée 4, la deuxième partie 2b étant illustrée en pointillé. La figure 6 illustre l'application de la deuxième lumière texturée 6, la première partie 2a étant illustrée en pointillé.

En alternative, au moins un obturateur 11 est connecté au circuit de commande 16 et il est monté mobile pour obturer alternativement la première lumière texturée 4 et la deuxième lumière texturée 6 et ainsi éclairer alternativement l'échantillon 2. L'utilisation d'un obturateur 11 est particulièrement avantageuse car il peut être déplacé rapidement pour bloquer au moins une partie de la première lumière texturée 4. Cela évite d'allumer et d'éteindre régulièrement le premier projecteur 3 et/ou le deuxième projecteur 5. Le circuit de commande 16 peut être configuré pour qu'une même portion de l'échantillon 2 ne soit pas éclairée simultanément par la première lumière texturée 4 et la deuxième lumière texturée 6.

L'application alternative de la première lumière texturée 4 et de la deuxième lumière texturée 6 lorsque la première partie 2a et la deuxième partie 2b se chevauchent et plus préférentiellement se recouvrement complètement permet de mesurer deux déformations différentes sur la deuxième partie 2b.

La première série d'images 8 permet de mesurer la déformation de la première partie 2a. La deuxième série d'images 10 permet de mesurer la déformation de la deuxième partie 2b. Lorsque la deuxième partie 2b et la première partie 2a se chevauchent, il est avantageux de soustraire la déformation globale de la première partie 2a, à ce qui est mesuré pour la deuxième partie 2b afin de déterminer la déformation spécifique de la deuxième partie 2b. Lorsque la première série d'images correspond à une zone de mesure qui est plus étendue que la deuxième série d'images et que la première zone entoure complètement la deuxième zone ou chevauche la deuxième zone sur au moins 50% de sa surface, il est particulièrement avantageux d'avoir une première série d'images 8 qui fournit une résolution inférieure à la deuxième série d'images 10, par exemple au moins 20% inférieur afin de limiter la quantité d'informations à traiter.

En alternative à la soustraction des déformations, il est possible de comparer la déformation de la deuxième partie 2b à la déformation de la première partie 2a. Si l'écart entre les déformations est inférieur à une valeur seuil, la ou les couches de la deuxième partie 2b sont compatibles avec la ou les couches de la première partie 2a. Par exemple, la deuxième partie 2b correspond à tout ou partie d'un composant disposé sur un support. La première partie 2a s'étend sur le support. La comparaison des déformations permet de détecter si la déformation du composant est compatible avec la déformation du support. En alternative, la deuxième partie 2b s'étend dans un trou du support afin de détecter si le trou formé dans le support modifie la déformation du support. Par exemple, le trou formé dans le support fait que l'on compare deux empilements différents de couches.

Dans une autre alternative, la première série d'images 8 est analysée et on calcule une topographie interpolée sur la deuxième partie 2b à partir de la mesure de la première partie 2a. Ensuite, on soustrait à la mesure de déformation de la deuxième partie 2b, la mesure de déformation interpolée de la première partie 2a, pour analyser seulement les déformations locales à la deuxième partie 2b. Lorsque la deuxième partie 2b possède un empilement différent de la première partie 2a, l'interpolation permet d'estimer la composante de déformation correspondante à l'empilement de la première partie 2a par rapport à la déformation calculée à partir de la deuxième série d'images 10.

De manière préférentielle, la deuxième partie 2b est incluse dans la première partie 2a. On soustrait la première déformation à la deuxième déformation ou on compare la première déformation et la deuxième déformation ou on soustrait à la première déformation une topographie interpolée de la deuxième partie 2b qui a été calculée à partir de la première déformation pour calculer les déformations locales de la deuxième partie 2b.

Le circuit de commande 16 comporte un ou plusieurs processeurs, une ou plusieurs mémoires destinées à stocker des informations. Le circuit de commande 16 peut être inclus dans un ordinateur.

Il est particulièrement avantageux que les images de la première série d'images 8 soient acquises simultanément aux images de la deuxième série d'images 10, c'est-à-dire au même instant ou quasiment au même instant pour que deux images soient représentatives du même état de déformation. L'utilisation de deux projecteurs et de deux caméras permet une plus grande rapidité de mesure qu'un seul projecteur appliquant deux jeux de lumières texturées différents et/ou une caméra réalisant deux acquisitions différentes. En adaptant la résolution de l'image prise par la caméra à la résolution du motif de lumière texturée fourni par le projecteur, on améliore la teneur en données pertinentes délivrées par la caméra. On évite de fournir des données pas assez précises car la caméra n'est pas assez performante vis-à-vis de la lumière texturée et on évite de saturer le circuit de commande 16 avec des données inutiles car la lumière texturée possède un pas trop grossier.

Dans un mode de réalisation particulier, le circuit de commande 16 commande la première caméra 7 et la deuxième caméra 9 pour acquérir des paires d'images qui correspondent à des mêmes états de déformation. Les états de déformation évoluent avec la rampe en température. Le circuit de commande 16 agit sur le premier projecteur 3 et sur le deuxième projecteur 5 pour délivrer les lumières texturées lors des acquisitions, par exemple en continu.

Dans un autre mode de réalisation, le circuit de commande 16 commande la première caméra 7 et la deuxième caméra 9 pour acquérir des images qui représentent des états de déformation différents entre la première caméra 7 et la deuxième caméra 9. Le circuit de commande 16 commande également la première caméra 7 et la deuxième caméra 9 pour acquérir une seule paire d'images qui correspond à un même état de déformation ou plusieurs paires d'images qui correspondent à des mêmes états de déformation. Les états de déformation évoluent avec la rampe en température.

Dans chaque série d'images, les images sont comparées entre elles ou à une image de référence pour calculer la déformation d'au moins une partie de l'échantillon. La ou les paires d'images acquises simultanément sont utilisées comme repères pour définir un ou des états de déformation communs aux deux séries d'images. Cela permet de comparer les états de déformations entre eux.

Par acquises au même état de déformation, on entend que les images sont acquises à des instants identiques ou proches. Le décalage temporel entre les acquisitions d'images peut être fonction de l'échantillon mesurée ou de la rampe en température appliquée. La différence entre deux images représentatives d'un même état de déformation peut être de quelques secondes, par exemple 5 secondes ou plus. Cette différence permet de réaliser des acquisitions avec une grande quantité de données sans avoir à utiliser des moyens de calcul aptes à gérer toutes ces données en même temps.

Préférentiellement, les deux projecteurs sont montés mobiles par rapport au porte-échantillon 1. Dans un mode de réalisation, les deux projecteurs sont montés mobiles selon des directions X et Y et le porte-échantillon 1 est monté immobile selon ces deux directions. Dans un autre mode de réalisation, les deux projecteurs sont montés immobiles selon des directions X et Y et le porte-échantillon 1 est monté mobile selon ces deux directions. Dans un dernier mode de réalisation, les deux projecteurs sont montés mobiles selon des directions X et Y et le porte-échantillon 1 est également monté mobile selon ces deux directions. Les deux projecteurs peuvent être montés mobiles indépendamment l'un de l'autre selon les directions X et/ou Y. Les directions X et Y sont perpendiculaires entre elles et perpendiculaires à la direction Z.

Il est également possible de prévoir que la première caméra 7 et/ou que la deuxième caméra 9 soient montées mobiles par rapport au porte-échantillon 1 selon les directions X et Y.

En alternative ou en complément, le circuit de commande 16 est également configuré pour déplacer la première partie 2a le long de l'échantillon 2 durant la déformation pour calculer la déformation d'une surface supérieure à au moins deux fois la surface de la première partie 2a, préférentiellement pour calculer la déformation d'une surface supérieure à 80% de la surface de l'échantillon 2. Plus préférentiellement, le circuit de commande 16 est configuré pour que le premier projecteur 3 et le deuxième projecteur 5 appliquent une première lumière texturée 4 et une deuxième lumière texturée 6 qui présentent le même pas de répétition. Il est avantageux que le circuit de commande 16 déplace les deux projecteurs et les deux caméras pour que la première partie 2a et la deuxième partie 2b se déplacent indépendamment l'une de l'autre afin de caractériser au moins 80% de la surface de l'échantillon 2. En utilisant deux couples distincts de projecteurs et caméras, il est possible de mesurer la surface de l'échantillon 2 deux fois plus vite.

## Revendications

1. Dispositif de mesure topographique comportant :
- un porte-échantillon (1) destiné à recevoir un échantillon (2) ;
- un premier projecteur (3) destiné à appliquer une première lumière texturée (4) sur au moins une première partie (2a) de l'échantillon (2) ;
- un deuxième projecteur (5) destiné à appliquer une deuxième lumière texturée (6) sur au moins une deuxième partie (2b) de l'échantillon (2), la deuxième partie (2b) étant différente de la première partie (2a) ;
- une première caméra (7) destinée à observer la première lumière texturée (4) appliquée sur la première partie (2a) de l'échantillon (2) pour acquérir une première série d'images (8) ;
- une deuxième caméra (9) destinée à observer la deuxième lumière texturée (6) appliquée sur la deuxième partie (2b) de l'échantillon (2) pour acquérir une deuxième série d'images (10) ;
- des moyens de chauffage (12) et/ou de refroidissement (13) configurés pour chauffer ou refroidir l'échantillon (2) et déformer l'échantillon (2) ;
- un circuit de commande (16) connecté au premier projecteur (3), au deuxième projecteur (5), à la première caméra (7) et à la deuxième caméra (9), le circuit de commande (16) étant configuré pour que la deuxième lumière texturée (6) possède des motifs avec un deuxième pas de répétition plus faible qu'un premier pas de répétition des motifs de la première lumière texturée (4) ;
dans lequel le circuit de commande (16) est connecté aux moyens de chauffage (12) et/ou de refroidissement (13) pour appliquer une rampe en température à l'échantillon (2) ;
dans lequel le circuit de commande (16) compare les images de la première série d'images entre elles ou à une référence pour en déduire une déformation de la première partie et compare les images de la deuxième série d'images entre elles ou à une référence pour en déduire une déformation de la deuxième partie ;
dans lequel durant la rampe en température, la première lumière texturée (4) est appliquée sur la première partie (2a) de l'échantillon (2) et la deuxième lumière texturée (6) est appliquée sur la deuxième partie (2b) de l'échantillon (2) et la première série d'images (8) et la deuxième série d'images (10) sont acquises ; dans lequel la deuxième partie (2b) est adjacente à la première partie (2a) ;
et dans lequel le circuit de commande (16) est configuré pour acquérir les images de la première série d'images (8) et de la deuxième série d'images (10) dans des mêmes états de déformation durant la rampe en température ou pour acquérir des images représentatives d'états de déformation différents et au moins une image la première série d'images et au moins une image de la deuxième série d'images représentatives d'un même état de déformation.

2. Dispositif de mesure topographique selon la revendication 1 dans lequel la deuxième partie (2b) recouvre au moins partiellement la première partie (2a).

3. Dispositif de mesure topographique selon la revendication 2 dans lequel la première partie (2a) de l'échantillon (2) forme un anneau autour de la deuxième partie (2b) de l'échantillon (2).

4. Dispositif de mesure topographique selon la revendication 3 dans lequel le premier projecteur (3) définit une zone vide dépourvue de motifs et dans lequel le deuxième projecteur (5) éclaire la zone vide sans éclairer les motifs de la première lumière texturée.

5. Dispositif de mesure topographique selon l'une quelconque des revendications 1 à 4 dans lequel le circuit de commande (16) est configuré pour que la première lumière texturée et la deuxième lumière texturée soient appliquées simultanément et pour acquérir simultanément les images de la première série d'images (8) et de la deuxième série d'images (10) durant la rampe en température.

6. Dispositif de mesure topographique selon la revendication 5 dans lequel la première lumière texturée (4) est appliquée avec une première longueur d'onde et la deuxième lumière texturée (6) est appliquée avec une deuxième longueur d'onde différente de la première longueur d'onde et dans lequel le circuit de commande (16) sépare la première lumière texturée (4) et la deuxième lumière texturée (6) par analyse colorimétrique ou la première caméra (7) et la deuxième caméra (9) sont munies de filtres optiques.

7. Dispositif de mesure topographique selon la revendication 2 ou 3 dans lequel le circuit de commande (16) est connecté à au moins un obturateur (11) configuré pour bloquer alternativement une transmission de la première lumière texturée (4) et de la deuxième lumière texturée (6) en direction du porte-échantillon (1) dans la deuxième partie (2b) pour éviter une superposition de la première lumière texturée (4) et de la deuxième lumière texturée (6) ou dans lequel le circuit de commande (16) est configuré pour émettre alternativement la première lumière texturée (4) et la deuxième lumière texturée (6).

8. Dispositif de mesure topographique selon la revendication 7 dans lequel le circuit de commande (16) est configuré pour acquérir au moins une image de la deuxième série d'images (10) entre deux images de la première série d'images (8) dans une période de temps.

9. Procédé de mesure topographique d'un échantillon (2) comportant les étapes suivantes :
- disposer un échantillon (2) sur un porte-échantillon (1) ;
- appliquer une rampe en température sur l'échantillon (2) ;
- appliquer une première lumière texturée (4) sur une première partie (2a) de l'échantillon (2) et une deuxième lumière texturée (6) sur une deuxième partie (2b) de l'échantillon (2) différente de la première partie (2a) de l'échantillon (2), la deuxième lumière texturée (6) possédant des motifs avec un deuxième pas de répétition plus faible qu'un premier pas de répétition des motifs de la première lumière texturée (4) ;
- acquérir une première série d'images (8) de la première lumière texturée (4) appliquée sur la première partie (2a) de l'échantillon (2) durant la rampe en température ;
- acquérir une deuxième série d'images (10) de la deuxième lumière texturée (6) appliquée sur la deuxième partie (2b) de l'échantillon (2) durant la rampe en température ;
- traiter la première série d'images (8) et la deuxième série d'images (10) pour déterminer une première déformation de la première partie (2a) et une deuxième déformation de la deuxième partie (2b) durant la rampe en température.

10. Procédé de mesure topographique d'un échantillon (2) selon la revendication 9 dans lequel la deuxième partie (2b) est incluse dans la première partie (2a) et dans lequel on soustrait la première déformation à la deuxième déformation ou dans lequel on compare la première déformation et la deuxième déformation ou dans lequel on soustrait à la première déformation une topographie interpolée de la deuxième partie (2b) qui a été calculée à partir de la première déformation pour calculer les déformations locales de la deuxième partie (2b).
